# FASCICULE DE BREVET EUROPEEN

(11) **EP 3 268 401 B1**
(45) Date de publication et mention de la délivrance du brevet: **27.02.2019**
(21) Numéro de dépôt: 16709352.5
(22) Date de dépôt: 08.03.2016
(51) Int. Cl.: C08F 297/00, B60C 1/00, B60C 5/14, C08L 53/00

(54) **OBJET PNEUMATIQUE POURVU D'UNE COUCHE ELASTOMERE A BASE D'UN ELASTOMERE THERMOPLASTIQUE SOUS FORME D'UN COPOLYMERE A BLOCS (A-B(A-CO-B))N-B-C**
REIFENOBJEKT MIT EINER ELASTOMERSCHICHT, DIE AUS EINEM THERMOPLASTISCHEN ELASTOMER IN FORM EINES (A-B-(A-CO-B))N-B-C-BLOCKCOPOLYMERS HERGESTELLT IST
TYRE OBJECT PROVIDED WITH AN ELASTOMER LAYER MADE OF A THERMOPLASTIC ELASTOMER IN THE FORM OF AN (A-B(A-CO-B))N-B-C BLOCK COPOLYMER

(30) Priorité: 09.03.2015 FR 1551941
(43) Date de publication de la demande: 17.01.2018
(73) Titulaire: Compagnie Générale des Etablissements Michelin, 63000 Clermont-Ferrand (FR)
(72) Inventeur: GREIVELDINGER, Marc, 63040 Clermont-Ferrand Cedex 09 (FR); CUSTODERO, Emmanuel, 63040 Clermont-Ferrand Cedex 09 (FR)
(74) Mandataire: Sidhu, Alban
(86) Numéro de dépôt international: PCT/EP2016/054925
(87) Numéro de publication internationale: WO 2016/142384

(56) Documents cités:
- EP-A1- 2 634 215
- EP-A1- 2 774 779
- FR-A1- 2 938 546
- JP-A- 2012 111 902

## Description

La présente invention est relative aux objets « pneumatiques », c'est-à-dire, par définition, aux objets qui prennent leur forme utilisable quand on les gonfle d'air ou d'un gaz de gonflage équivalent, et en particulier aux bandages pneumatiques.

Plus particulièrement, la présente invention se rapporte à un objet pneumatique pourvu d'une couche élastomère étanche aux gaz de gonflage, ladite couche élastomère comportant à titre d'élastomère majoritaire un élastomère thermoplastique sous forme d'un copolymère à blocs particulier.

L'invention concerne également un procédé pour étanchéifier un objet pneumatique au moyen de la couche élastomère étanche aux gaz de gonflage telle que définie ci-dessus.

Enfin, l'invention concerne l'utilisation comme couche étanche aux gaz de gonflage, dans un objet pneumatique, d'une couche élastomère telle que définie ci-dessus.

Dans un bandage pneumatique conventionnel du type « tubeless » (c'est-à-dire sans chambre à air), la face radialement interne comporte une couche étanche à l'air (ou plus généralement à tout gaz de gonflage) qui permet le gonflement et le maintien sous pression du bandage pneumatique. Ses propriétés d'étanchéité lui permettent de garantir un taux de perte de pression relativement faible, permettant de maintenir le bandage gonflé en état de fonctionnement normal pendant une durée suffisante, normalement de plusieurs semaines ou plusieurs mois. Elle a également pour fonction de protéger l'armature de carcasse de la diffusion d'air provenant de l'espace intérieur au bandage.

Cette fonction de couche interne ou gomme « intérieure » (« inner liner ») étanche est aujourd'hui remplie par des compositions à base de caoutchouc butyle (copolymère d'isobutylène et d'isoprène), reconnues depuis fort longtemps pour leurs excellentes propriétés d'étanchéité.

Toutefois, un inconvénient bien connu des compositions à base de caoutchouc butyle est qu'elles présentent des pertes hystérétiques importantes, qui plus est sur un spectre large de températures, inconvénient qui pénalise la résistance au roulement des bandages pneumatiques.

Diminuer l'hystérèse de ces couches internes d'étanchéité et donc in fine la consommation de carburant des véhicules automobiles, est un objectif général auquel se heurte la technologie actuelle.

Les élastomères thermoplastiques du type SIBS (styrène-isobutylène-styrène) ont été développés afin d'améliorer les propriétés d'hystérèse des couches internes d'étanchéité les contenant. On peut notamment citer les demandes de brevet FR 08/57844 et FR 08/57845.

Cependant, l'utilisation de formulations à base de SIBS en tant que couche interne d'étanchéité présente des inconvénients.

D'une part, les couches internes d'étanchéité à base de SIBS présentent un manque d'adhésion aux autres composants de l'objet pneumatique et cela aussi bien à cru lors de la constitution du pneu que à cuit avec la nappe carcasse. En effet, l'absence de doubles liaisons dans l'élastomère thermoplastique le rend peu sensible à la co-vulcanisation avec la nappe carcasse lors de la cuisson.

D'autre part, les objets pneumatiques obtenus à partir de ces élastomères thermoplastiques présentent une tenue thermique limitée, ce qui s'exprime par l'impossibilité de déboiter l'objet pneumatique de la presse de cuisson à chaud sans arrachement de matière mais aussi par l'apparition de fluage de matières lors des tests d'endurance sollicitant d'un point de vue thermomécanique, comme les tests de roulage à grande vitesse.

Il existe donc un besoin de développer de nouveaux objets pneumatiques à base d'un élastomère thermoplastique utilisable comme couche interne d'étanchéité. Ces objets pneumatiques, tout en conservant de bonnes propriétés d'étanchéité, doivent aussi présenter un bon compromis en termes d'adhésion et en termes de tenue thermique.

La demanderesse a maintenant découvert de manière surprenante qu'un élastomère thermoplastique sous forme d'un copolymère à blocs qui comprend un bloc élastomère et un ou plusieurs blocs thermoplastiques, ces derniers étant eux-mêmes sous forme d'un copolymère à blocs dont au moins un premier bloc est constitué d'unités issues d'au moins un premier monomère polymérisable et au moins un second bloc est constitué d'un copolymère statistique d'unités issues d'au moins un second monomère polymérisable et d'unités issues du β-pinène, utilisable comme couche élastomère étanche au gaz de gonflage dans un objet pneumatique, permettait d'obtenir un objet pneumatique présentant une bonne étanchéité aux gaz de gonflage, ainsi qu'un bon compromis en termes d'adhésion des éléments de l'objet pneumatique entre eux et en termes de tenue thermique.

L'invention a donc pour objet un objet pneumatique pourvu d'une couche élastomère étanche aux gaz de gonflage, ladite couche élastomère comportant à titre d'élastomère majoritaire un élastomère thermoplastique sous forme d'un copolymère à blocs qui comprend :
a) un bloc élastomère comportant au moins des unités issues de l'isobutylène, et présentant une température de transition vitreuse inférieure ou égale à -20°C,
b) un ou plusieurs blocs thermoplastiques, le ou les blocs thermoplastiques comprenant chacun au moins un premier bloc constitué d'unités issues d'au moins un premier monomère polymérisable et au moins un deuxième bloc, le ou lesdits deuxièmes blocs étant un copolymère statistique constitué d'unités issues d'au moins un second monomère polymérisable et d'unités issues du β-pinène.

Le structure et la composition particulière de ce copolymère à blocs permettent de conférer à la couche étanche dans l'objet pneumatique de bonnes propriétés d'adhésion aussi bien à cru lors de la conformation que à cuit avec les composants en caoutchouc qui lui sont adjacents, en particulier avec la nappe carcasse.

Cette structure et cette composition permettent aussi de conférer à l'objet pneumatique une bonne tenue thermique notamment afin d'éviter l'arrachement de matière lorsque l'objet pneumatique est déboité de la presse de cuisson mais aussi permet d'éviter le fluage de matière pendant son utilisation, en particulier lors des tests d'endurance sollicitant d'un point de vue thermomécanique.

L'invention a également pour objet un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz de gonflage telle que définie ci-dessus.

Enfin, l'invention a pour objet l'utilisation comme couche étanche aux gaz de gonflage, dans un objet pneumatique, d'une couche élastomère telle que définie ci-dessus.

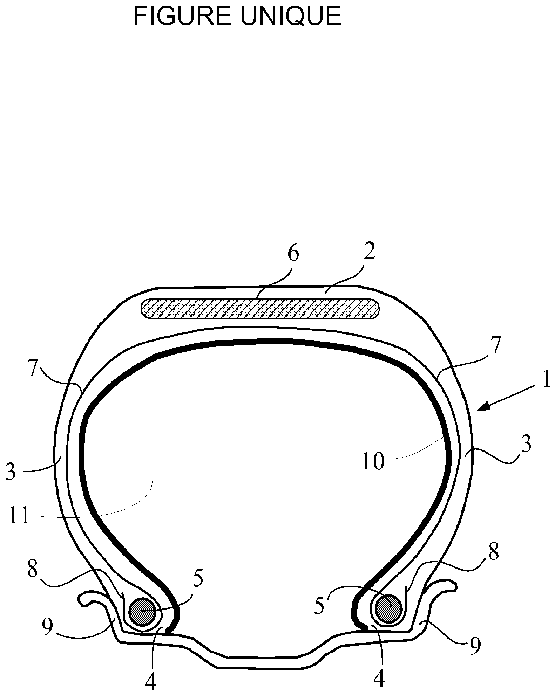

L'invention ainsi que ses avantages seront aisément compris à la lumière de la description, des exemples de réalisations qui suivent et de la figure unique qui schématise, en coupe radiale, un bandage pneumatique conforme à l'invention.

Dans la présente description, sauf indication expresse différente, tous les pourcentages (%) indiqués sont des % en masse.

D'autre part, tout intervalle de valeurs désigné par l'expression « entre a et b » représente le domaine de valeurs allant de plus de a à moins de b (c'est-à-dire bornes a et b exclues) tandis que tout intervalle de valeurs désigné par l'expression « de a à b » signifie le domaine de valeurs allant de a jusqu'à b (c'est-à-dire incluant les bornes strictes a et b).

Dans la présente demande, par « majoritaire » en désignant un élastomère, on entend que cet élastomère est majoritaire parmi l'ensemble des autres élastomères présents dans la composition élastomérique ou la couche élastomérique, c'est-à-dire que cet élastomère représente plus de 50 % en poids de l'ensemble des élastomères présents dans la composition élastomérique ou la couche élastomérique.

Dans la présente demande, on entend par « partie pour cent d'élastomère » ou « pce », la partie en poids d'un constituant pour 100 parties en poids du ou des élastomères c'est-à-dire du poids total du ou des élastomères, qu'ils soient thermoplastiques ou non thermoplastiques. Ainsi, un constituant à 60 pce signifiera par exemple 60 g de ce constituant pour 100 g d'élastomère.

Par bloc constitué d'unités issues d'au moins un premier monomère polymérisable, on entend que ce bloc comprend au moins une séquence de 5 unités issues d'au moins un premier monomère polymérisable.

Par copolymère statistique constitué d'unités issues d'au moins un second monomère polymérisable et d'unités issues du β-pinène, on entend que ce copolymère est constitué d'une distribution aléatoire d'unités issues d'au moins un second monomère polymérisable et d'unités issues du β-pinène.

Par bloc étant un copolymère statistique, appelé deuxième bloc, on entend que ce bloc comprend au moins une séquence de 5 unités, ladite séquence étant un mélange d'unités issues d'au moins un second monomère polymérisable et d'unités issues du β-pinène.

Par bloc élastomère, on entend que ce bloc comprend au moins une séquence de 5 unités issues de l'isobutylène.

Ainsi, un premier objet de l'invention est un objet pneumatique pourvu d'une couche élastomère étanche aux gaz de gonflage, ladite couche élastomère comportant à titre d'élastomère majoritaire un élastomère thermoplastique sous forme d'un copolymère à blocs qui comprend :
a) un bloc élastomère comportant au moins des unités issues de l'isobutylène, et présentant une température de transition vitreuse inférieure ou égale à -20°C,
b) un ou plusieurs blocs thermoplastiques, le ou les blocs thermoplastiques comprenant chacun au moins un premier bloc constitué d'unités issues d'au moins un premier monomère polymérisable et au moins un deuxième bloc, le ou lesdits deuxième bloc étant un copolymère statistique constitué d'unités issues d'au moins un second monomère polymérisable et d'unités issues du β-pinène.

Dans la présente invention, la température de transition vitreuse (notée Tg) peut être mesurée par la méthode DMA (pour « dynamic mechanical analysis ») consistant à établir la courbe d'évolution du module élastique G' en fonction de la température. Selon cette méthode, la température de transition vitreuse correspond à la température à laquelle on observe l'intersection entre la droite tangente au plateau vitreux et la droite tangente à la zone de transition entre le plateau vitreux et le plateau caoutchoutique.

Ainsi, dans la présente description, sauf indication expresse différente, la température de transition vitreuse est définie comme la température à laquelle on observe l'intersection entre la droite tangente au plateau vitreux et la droite tangente à la zone de transition entre le plateau vitreux et le plateau caoutchoutique, lors du balayage en température d'un échantillon réticulé (taille de l'échantillon longueur : 6 mm, largeur : 5 mm, épaisseur : 2 mm) soumis à une sollicitation sinusoïdale (fréquence de 10 Hz). Comme indiqué précédemment, cette Tg est mesurée lors de la mesure des propriétés dynamiques, sur un viscoanalyseur (DVA 200 - IT Instrumental Control), selon la norme JIS K 6384 (Testing Methods for Dynamic Properties of Vulcanized Rubber and Thermoplastic Rubber).

Selon une première variante de l'invention, le copolymère à blocs présente une structure où le bloc élastomère est relié à une de ses extrémités à un bloc thermoplastique.

Dans un mode particulier de cette première variante, le copolymère à blocs présente une structure tribloc avec un bloc isobutylène (bloc élastomère), un bloc constitué d'unités issues d'au moins un premier monomère polymérisable et un bloc constitué d'un copolymère statistique d'unités issues du β-pinène et d'unités issues d'au moins un second monomère polymérisable.

Dans un premier sous-mode particulier de cette première variante, le copolymère à blocs présente une structure tribloc dans l'ordre suivant : bloc isobutylène/bloc (β-pinène-co-unités issues d'au moins un second monomère polymérisable)/bloc constitué d'unités issues d'au moins un premier monomère polymérisable.

Dans un second sous-mode particulier de cette première variante, le copolymère à blocs présente une structure tribloc dans l'ordre suivant : bloc isobutylène/bloc constitué d'unités issues d'au moins un premier monomère polymérisable/bloc (β-pinène-co-unités issues d'au moins un second monomère polymérisable).

Le signe « -co- » signifiant que les deux espèces de part et d'autre de ce signe constitue un copolymère statistique.

Selon une deuxième variante de l'invention, le copolymère à blocs présente une structure linéaire où le bloc élastomère est relié à chacune de ses extrémités à un bloc thermoplastique.

Dans un mode particulier de cette deuxième variante, le copolymère à blocs présente une structure à cinq blocs avec un bloc isobutylène (bloc élastomère) central et, à chaque extrémité du bloc isobutylène, un bloc constitué d'unités issues d'au moins un premier monomère polymérisable et un bloc constitué d'un copolymère statistique d'unités issues du β-pinène et d'unités issues d'au moins un second monomère polymérisable.

Dans un premier sous-mode particulier de cette deuxième variante, le copolymère à blocs présente une structure à cinq blocs dans l'ordre suivant : bloc constitué d'unités issues d'au moins un premier monomère polymérisable/bloc (β-pinène-co-unités issues d'au moins un second monomère polymérisable)/bloc isobutylène/bloc (β-pinène-co-unités issues d'au moins un second monomère polymérisable)/bloc constitué d'unités issues d'au moins un premier monomère polymérisable.

Dans un deuxième sous-mode particulier de cette deuxième variante, le copolymère à blocs présente une structure à cinq blocs dans l'ordre suivant : bloc (β-pinène-co-unités issues d'au moins un second monomère polymérisable)/bloc constitué d'unités issues d'au moins un premier monomère polymérisable/bloc isobutylène/bloc constitué d'unités issues d'au moins un premier monomère polymérisable/bloc (β-pinène-co-unités issues d'au moins un second monomère polymérisable).

Selon une troisième variante de l'invention, le copolymère à blocs présente une structure étoilée, le bloc élastomère étant central et étant relié de 3 à 12 branches, chaque branche étant constituée d'un bloc thermoplastique. De préférence, le nombre de branches du copolymère à blocs varie de 3 à 6.

Selon une autre variante de l'invention, le copolymère à blocs se présente sous une forme branchée ou dendrimère. Le copolymère à blocs se compose alors d'un élastomère branché ou dendrimérique et d'un bloc thermoplastique, situé à chacune des extrémités des branches de l'élastomère branché ou dendrimérique.

Le copolymère à blocs possède de préférence une température de transition vitreuse (Tg, mesurée par méthode DMA) inférieure à -20°C, plus préférentiellement inférieure à -40°C, et encore plus préférentiellement inférieure à -50°C. Une valeur de Tg supérieure à ces minimas peut diminuer les performances de la couche étanche lors d'une utilisation à très basse température.

De manière préférée, le copolymère à blocs utilisable selon l'invention présente une masse moléculaire moyenne en poids allant de 30 à 300 kg/mol, de préférence de 120 à 250 kg/mol.

En dessous du minimum indiqué, la cohésion entre les chaines de l'élastomère pourrait être affectée. De plus, dans ce cas, une augmentation de la température d'usage pourrait affecter les propriétés mécaniques, notamment les propriétés à la rupture, avec pour conséquence une performance diminuée « à chaud ».

Par ailleurs, une masse moléculaire trop élevée peut être pénalisante pour la mise en oeuvre de la couche étanche aux gaz, celle-ci pouvant s'avérer difficile, voire impossible.

Les masses moléculaires moyennes en poids (Mw) et en nombre (Mn) du copolymère à blocs utilisable selon l'invention peuvent être déterminées, de manière connue en soi, par GPC (pour « Gel Permeation Chromatography »).

L'unité GPC comprend quatre modules : « Waters 717 plus autosampler », « Waters 515 HPLC pump », « Water 2487 » et « Water 2414 ». Un échantillon de solution de 0,05 ml est injecté et passe à travers les colonnes (Shodex® GPC K-804 et Shodex® GPC K-802.5) grâce à un éluent (chloroforme) à un débit de 1,0 ml/mn à 35°C.

Le copolymère à blocs utilisable dans la couche élastomère étanche de l'objet pneumatique selon l'invention présente généralement un indice de polydispersité (Ip = Mw/Mn) inférieur ou égal à 3, plus préférentiellement inférieur ou égal à 2, et encore plus préférentiellement inférieur ou égal à 1,5.

Pour rappel, le copolymère à blocs utilisable dans la couche élastomère étanche de l'objet pneumatique selon l'invention comprend un bloc élastomère et un ou plusieurs blocs thermoplastiques.

Le bloc élastomère de ce copolymère à blocs comporte au moins des unités issues de l'isobutylène, et présente une température de transition vitreuse inférieure ou égale à -20°C (Tg, mesurée par méthode DMA).

De manière préférée, le bloc élastomère présente une température de transition vitreuse inférieure ou égale à -40°C, de préférence inférieure ou égale à -50°C.

Dans une variante préférée de l'invention, le bloc élastomère comprend en outre de 0,5 à 6 % en poids, de préférence de 1,5 à 5 % en poids, par rapport au poids total du bloc élastomère, d'unités issues d'un ou plusieurs diènes conjugués.

Les diènes conjugués pouvant être copolymérisés avec l'isobutylène pour constituer le bloc élastomère sont des diènes conjugués en C₄-C₁₄. De préférence, ces diènes conjugués sont choisis parmi l'isoprène, le 1,3-butadiène, le 1-méthylbutadiène, le 2-méthylbutadiène, le 2,3-diméthyl-1,3-butadiène, le 2,4-diméthyl-1,3-butadiène, le 1,3-pentadiène, le 2-méthyl-1,3-pentadiène, le 3-méthyl-1,3-pentadiène, le 4-méthyl-1,3-pentadiène, le 2,3-diméthyl-1,3-pentadiène, le 1,3-hexadiène, le 2-méthyl-1,3-hexadiène, le 3-méthyl-1,3-hexadiène, le 4-méthyl-1,3-hexadiène, le 5-méthyl-1,3-hexadiène, le 2,3-diméthyl-1,3-hexadiène, le 2,4-diméthyl-1,3-hexadiène, le 2,5-diméthyl-1,3-hexadiène, le 2-neopentylbutadiène, le 1,3-cyclopentadiène, le 1,3-cyclohexadiène, le 1-vinyl-1,3-cyclohexadiène et leur mélange.

Plus préférentiellement, le diène conjugué est l'isoprène ou un mélange contenant de l'isoprène.

De manière avantageuse, le bloc élastomère est halogéné.

Cette halogénation permet d'augmenter la vitesse de cuisson de la couche élastomère comprenant le copolymère à blocs. Cette halogénation permet d'améliorer la compatibilité du copolymère à blocs avec les autres éléments constitutifs de la couche élastomère étanche aux gaz de gonflage. L'halogénation se fait notamment au moyen de brome ou de chlore, préférentiellement du brome, sur les unités issues de diènes conjugués de la chaîne polymérique du bloc élastomère. Seule une partie de ces unités réagit avec l'halogène. Cette partie d'unités issues de diènes conjugués réactive doit néanmoins être telle que le taux d'unités issues de diènes conjugués n'ayant pas réagi avec l'halogène soit d'au moins 0,5 % en poids par rapport au poids du bloc élastomère.

Comme expliqué précédemment, le copolymère à blocs utilisable dans la couche élastomère étanche de l'objet pneumatique selon l'invention comprend aussi un ou plusieurs blocs thermoplastiques.

Le ou les blocs thermoplastiques de ce copolymère à blocs comprennent chacun au moins un premier bloc constitué d'unités issues d'au moins un premier monomère polymérisable et au moins un deuxième bloc, le deuxième bloc étant un copolymère statistique constitué d'unités issues d'au moins un second monomère polymérisable et d'unités issues du β-pinène.

De manière préférée, le ou les premiers monomères polymérisables et/ou le ou les seconds monomères polymérisables sont choisis parmi les monomères styréniques.

Par monomère styrénique, on entend dans la présente description, tout monomère à base de styrène, non substitué comme substitué.

On pourra notamment citer les monomères suivants : le styrène, les méthylstyrènes et notamment l'o-méthylstyrène, le m-méthylstyrène, le p-méthylstyrène, l'alpha-2-diméthylstyrène, l'alpha-4-diméthylstyrène et le diphényléthylène ; les butylstyrènes par exemple le para-tertio-butylstyrène ; les chlorostyrènes par exemple l'o-chlorostyrène, le m-chlorostyrène, le p-chlorostyrène, le 2,4-dichlorostyrène, le 2,6-dichlorostyrène et le 2,4,6-trichlorostyrène ; les bromostyrènes par exemple l'o-bromostyrène, le m-bromostyrène, le p-bromostyrène, le 2,4-dibromostyrène, le 2,6-dibromostyrène et le 2,4,6-tribromostyrène ; les fluorostyrènes par exemple l'o-fluorostyrène, le m-fluorostyrène, le p-fluorostyrène, le 2,4-difluorostyrène, le 2,6-difluorostyrène et le 2,4,6-trifluorostyrène ; et le para-hydroxy-styrène.

De préférence, le ou les premiers monomères polymérisables et/ou le ou les seconds monomères polymérisables selon l'invention sont choisis parmi le styrène, le diphényléthylène, le p-méthylstyrène, le p-tertiobutylstyrène, le p-chlorostyrène et le p-fluorostyrène.

Le ou les premiers monomères polymérisables et/ou le ou les seconds monomères polymérisables peuvent aussi être choisis parmi les monomères indéniques.

Par monomère indénique doit être entendu dans la présente description tout monomère à base d'indène, non substitué comme substitué. Parmi les indènes substitués peuvent être cités par exemple les alkyl indènes et les aryl indènes.

A titre de premiers et/ou de seconds monomères polymérisables, on peut encore citer les composés suivants et leurs mélanges :
- l'acénaphtylène ; l'homme de l'art pourra par exemple se référer à l'article de Z. Fodor et J.P. Kennedy, Polymer Bulletin 1992 29(6) 697-705 ;
- l'isoprène, conduisant alors à la formation d'un certain nombre d'unités polyisoprène 1,4-trans et d'unités cyclisées selon un processus intramoléculaire ; l'homme de l'art pourra par exemple se référer aux documents G. Kaszas, J.E. Puskas, P. Kennedy Applied Polymer Science (1990) 39(1) 119-144 et J.E. Puskas, G. Kaszas, J.P. Kennedy, Macromolecular Science, Chemistry A28 (1991) 65-80 ;
- les esters de l'acide acrylique, de l'acide crotonique, de l'acide sorbique, de l'acide méthacrylique, les dérivés de l'acrylamide, les dérivés du méthacrylamide, les dérivés de l'acrylonitrile, les dérivés du méthacrylonitrile et leurs mélanges ; on peut citer plus particulièrement, l'acrylate d'adamantyle, le crotonate d'adamantyle, le sorbate d'adamantyle, l'acrylate de 4-biphénylyle, l'acrylate de tertio-butyle, l'acrylate de cyanométhyle, l'acrylate de 2-cyanoéthyle, l'acrylate de 2-cyanobutyle, l'acrylate de 2-cyanohexyle, l'acrylate de 2-cyanoheptyle, l'acrylate de 3,5-diméthyladamantyle, le crotonate de 3,5-diméthyladamantyle, l'acrylate d'isobornyle, l'acrylate de pentachlorobenzyle, l'acrylate de pentaflurobenzyle, l'acrylate de pentachlorophényle, l'acrylate de pentafluorophényle, le méthacrylate d'adamantyle, le méthacrylate de 4-tert-butylcyclohexyle, le méthacrylate de tert-butyle, le méthacrylate de 4-tert-butylphényle, le méthacrylate de 4-cyanophényle, le méthacrylate de 4-cyanométhylphényle, le méthacrylate de cyclohexyle, le méthacrylate de 3,5-diméthyladamantyle, le méthacrylate de diméthylaminoéthyle, le méthacrylate de 3,3-diméthylbutyle, l'acide méthacrylique, le méthacrylate de méthyle, le méthacrylate d'éthyle, le méthacrylate de phényle, le méthacrylate d'iso-bornyle, le méthacrylate de tétradécyle, le méthacrylate de triméthylsilyle, le méthacrylate de 2,3-xylényle, le méthacrylate de 2,6-xylényle, l'acrylamide, le N-sec-butylacrylamide, le N-tert-butylacrylamide, le N,N-diisopropylacrylamide, le N-1-méthylbutylacrylamide, le N-méthyl-N-phénylacrylamide, le morpholylacrylamide, le pipéridylacrylamide, le N-tert-butylméthacrylamide, le 4-butoxycarbonylphénylméthacrylamide, le 4-carboxyphénylméthacrylamide, le 4-méthoxycarbonylphénylméthacrylamide, le 4-éthoxycarbonylphénylméthacrylamide, le cyanoacrylate de butyle, le chloroacrylate de méthyle, le chloroacrylate d'éthyle, le chloroacrylate d'isopropyle, le chloroacrylate d'isobutyle, le chloroacrylate de cyclohexyle, le fluorométhacrylate de méthyle, le phénylacrylate de méthyle, l'acrylonitrile, le méthacrylonitrile, et leurs mélanges.

De manière particulièrement préférée, le premier monomère et/ou le second monomère polymérisable est le styrène.

Dans un mode particulier de l'invention, le premier monomère et le second monomère polymérisable sont identiques et peuvent être choisis parmi les monomères tels que décrits ci-dessus.

De manière préférée dans ce mode particulier de l'invention, le premier monomère polymérisable et le second monomère polymérisable sont choisis parmi les monomères styréniques.

De manière tout particulièrement préféré dans ce mode particulier de l'invention, le premier monomère polymérisable et le second monomère polymérisable sont le styrène.

De manière particulièrement préférée dans le copolymère à blocs utilisable selon l'invention, le premier et le second monomère polymérisable ne sont pas le β-pinène.

Comme expliqué précédemment, le ou les blocs thermoplastiques de ce copolymère à blocs comprennent chacun au moins un premier bloc constitué d'unités issues d'au moins un premier monomère polymérisable et au moins un deuxième bloc, le ou lesdits deuxièmes blocs étant un copolymère statistique constitué d'unités issues d'au moins un second monomère polymérisable et d'unités issues du β-pinène.

De manière préférée, le taux desdites unités issues du β-pinène varie de 0,5 à 25 % en moles, de préférence de 0,8 à 5 % en moles par rapport au nombre de moles d'unités du copolymère à blocs.

Pour un taux de β-pinène supérieur à 25 %, la tenue thermique de la couche étanche aux gaz de gonflage pourrait se dégrader. En revanche, pour un taux de β-pinène inférieur à 0,5 %, l'effet bénéfique de la présence de β-pinène dans la couche étanche aux gaz de gonflage sur l'adhésion pourrait n'être quasiment pas perceptible.

Le ou les blocs thermoplastiques représentent généralement de 5 à 30 % en poids, de préférence de 10 à 20 % en poids par rapport au poids total du copolymère à blocs.

Le copolymère à blocs utilisable selon l'invention confère à la composition étanche aux gaz de gonflage qui le contient une forte capacité d'adhésion sur les composants en caoutchouc de l'objet pneumatique, notamment bandage pneumatique, qui lui sont adjacents.

En outre, ce copolymère à blocs, malgré sa nature thermoplastique, confère à la composition étanche aux gaz qui le contient une bonne cohésion à chaud du matériau, notamment à des températures allant de 150 à 200°C. Ces températures correspondent aux températures de cuisson de bandages pneumatiques. Cette cohésion à haute température permet un démoulage à chaud de ces pneumatiques sans altérer l'intégrité de la composition étanche aux gaz contenant le copolymère à blocs particulier.

Aussi, le copolymère à blocs utilisables selon l'invention permet-il, de manière surprenante, de satisfaire un compromis de propriétés, souvent antinomiques, de cohésion à chaud de la composition qui le contient et d'adhésion de celle-ci sur les composants de caoutchouc qui lui sont adjacents dans l'objet pneumatique. Ce compromis de propriétés est atteint tout en conservant les propriétés d'étanchéité et l'aptitude à la mise en oeuvre de la composition comprenant ce copolymère à blocs, ainsi qu'en conférant des propriétés d'hystérèse améliorées (comparé au caoutchouc butyle) en tant que gomme intérieure pour bandage pneumatique.

Le copolymère à blocs utilisable dans la couche élastomère étanche de l'objet pneumatique selon l'invention peut être préparé par des procédés de synthèse connus en soi et décrits dans la littérature, notamment celle citée dans la présentation de l'état de la technique de la présente description. L'homme du métier saura choisir les conditions de polymérisation adéquates et réguler les différents paramètres des procédés de polymérisation afin d'aboutir aux caractéristiques spécifiques de structure du copolymère à blocs utilisable selon l'invention.

Notamment, plusieurs stratégies de synthèse peuvent être mises en oeuvre en vue de préparer le copolymère à blocs utilisable selon l'invention.

Une première stratégie consiste en une première étape de synthèse du bloc élastomère par polymérisation cationique vivante des monomères à polymériser au moyen d'un amorceur mono fonctionnel, difonctionnel ou polyfonctionnel connu de l'homme de l'art, suivie de la seconde étape de synthèse du ou des blocs thermoplastiques par polymérisation soit d'au moins un premier monomère polymérisable ou soit d'un mélange d'au moins un second monomère polymérisable et d'un monomère de β-pinène sur le bloc élastomère vivant obtenu dans la première étape, puis d'une troisième étape de synthèse du ou des blocs thermoplastiques par polymérisation respectivement soit d'un mélange d'au moins un second monomère polymérisable et d'un monomère de β-pinène ou soit d'au moins un premier monomère polymérisable, sur le bloc vivant issu de la deuxième étape.

Ainsi, ces trois étapes sont consécutives, ce qui se traduit par l'ajout séquencé :
- des monomères à polymériser pour la préparation du bloc élastomère : de l'isobutylène seul ou en mélange avec un ou plusieurs monomères diènes conjugués ;
- d'un ou des premiers monomères polymérisables ou du mélange du ou des seconds monomères polymérisable et du β-pinène,
- du mélange du ou des seconds monomères polymérisable et du β-pinène ou d'un ou des premiers monomères polymérisables.

A chaque étape, le ou les monomères à polymériser peuvent ou non être ajoutés sous la forme d'une solution dans un solvant tel que décrit ci-après, en présence ou non d'un acide ou d'une base de Lewis tels que décrits ci-après.

Chacune de ces étapes peut être réalisée dans un même réacteur ou dans deux réacteurs de polymérisation différents. A titre préférentiel, ces deux étapes sont réalisées dans un seul et unique réacteur (synthèse en « one-pot »).

La polymérisation cationique vivante s'effectue classiquement en moyen d'un amorceur et éventuellement d'un acide de Lewis jouant le rôle de co-amorceur afin de former in situ un carbocation. Habituellement sont ajoutés des composés électro-donneurs afin de conférer à la polymérisation un caractère vivant.

A titre d'illustration, les amorceurs mono fonctionnels, difonctionnels ou polyfonctionnels utilisables pour la préparation du copolymère à blocs utilisable selon l'invention peuvent être choisis parmi le (2-méthoxy-2-propyl)-benzène (éther de cumylméthyle), le (2-chloro-2-propyl)-benzène (chlorure de cumyle), le (2-hydroxy-2-propyl)-benzène, le (2-acétoxy-2-propyl)-benzène, le 1,4-di(2-méthoxy-2-propyl)-benzène (ou éther de dicumylméthyle), le 1,3,5-tri(2-méthoxy-2-propyl)-benzène (ou éther de tricumylméthyle), le 1,4-di(2-chloro-2-propyl)-benzène (ou chlorure de dicumyle), le 1,3,5-tri(2-chloro-2-propyl)-benzène (ou chlorure de tricumyle), le 1,4-di(2-hydroxy-2-propyl)-benzène, le 1,3,5-tri(2-hydroxy-2-propyl)-benzène, le 1,4-di(2-acétoxy-2-propyl)-benzène, le 1,3,5-tri(2-acétoxy-2-propyl)-benzène, le 2,6-dichloro-2,4,4,6-tétraméthylheptane et le 2,6-dihydroxy-2,4,4,6-heptane.

A titre préférentiel, sont utilisés les éthers de dicumyle, les éthers de tricumyle, les halogénures de dicumyle ou les halogénures de tricumyle.

Les acides de Lewis peuvent être choisis parmi les halogénures de métaux, de formule générale MXn où M est un élément choisi parmi Ti, Zr, Al, Sn, P, B, X est un halogène tel que Cl, Br, F ou I et n correspondant au degré d'oxydation de l'élément M. On citera par exemple TiCl₄, AlCl₃, BCl₃, BF₃, SnCl₄, PCl₃, PCl₅. Les composés TiCl₄, AlCl₃ et BCl₃ sont utilisés à titre préférentiel, et TiCl₄ à titre encore plus préférentiel.

Les composés électro-donneurs peuvent être choisis parmi les bases de Lewis connues, tels que les pyridines, les amines, les amides, les esters, les sulfoxydes et autres. Parmi eux sont préférés le DMSO (diméthylsulfoxyde) et le DMAc (diméthylacétamide).

La polymérisation cationique vivante s'effectue dans un solvant inerte apolaire ou dans un mélange de solvants inertes apolaire et polaire.

Les solvants apolaires pouvant être utilisés pour la synthèse du copolymère à blocs utilisable selon l'invention sont par exemple les solvants hydrocarbonés, aliphatiques, cycloaliphatiques ou aromatiques, tels que l'hexane, l'heptane, le cyclohexane, le méthylcyclohexane, le benzène ou le toluène.

Les solvants polaires pouvant être utilisés pour la synthèse du copolymère à blocs utilisable selon l'invention sont par exemple les solvants halogénés tels que les halogénures d'alcane, comme le chlorure de méthyle (ou chloroforme), le chlorure d'éthyle, le chlorure de butyle, le chlorure de méthylène (ou dichlorométhane) ou les chlorobenzènes (mono-, di- ou tri-chloro).

L'homme du métier saura choisir les conditions de température adéquates en vue d'atteindre les caractéristiques de masses moléculaires de ce copolymère.

Une deuxième stratégie de synthèse consiste à préparer séparément :
- un bloc élastomère téléchélique ou fonctionnel à l'une ou à ses extrémités de chaînes par polymérisation cationique vivante au moyen d'un amorceur monofonctionnel, difonctionnel ou polyfonctionnel, suivie éventuellement de réaction de fonctionnalisation sur les extrémités de chaînes,
- le ou les blocs thermoplastiques vivants par exemple par polymérisation anionique,
puis à faire réagir l'un et l'autre pour l'obtention d'un copolymère à blocs utilisable selon l'invention. La nature des fonctions réactives à chacune des extrémités de chaînes du bloc élastomère et la proportion de blocs thermoplastiques vivants par rapport au bloc élastomère seront choisies par l'homme du métier pour l'obtention d'un copolymère à blocs utilisable selon l'invention.

L'halogénation éventuelle du copolymère à blocs utilisable selon l'invention obtenu selon l'une ou l'autre des stratégies de synthèse est réalisée selon toute méthode connue de l'homme de l'art, notamment celles utilisées pour l'halogénation du caoutchouc butyle et peut se faire par exemple au moyen de brome ou de chlore, préférentiellement du brome, sur les unités issues de diènes conjugués de la chaîne polymérique du bloc élastomère, lorsqu'elles sont présentes, ou sur les unités issues du β-pinène.

Dans certaines variantes de l'invention selon lesquelles le copolymère à blocs est étoilé ou encore branché, les procédés décrits par exemple dans les articles de Puskas J. Polym. Sci Part A : Polymer Chemistry, vol 36, pp85-82 (1998) et Puskas, J. Polym. Sci Part A : Polymer Chemistry, vol 43, pp1811-1826 (2005) peuvent être mis en oeuvre par analogie pour obtenir des blocs centraux élastomère étoilés, branchés ou dendrimères vivants. L'homme du métier saura alors choisir la composition des mélanges de monomères à utiliser en vue de préparer le copolymère à blocs utilisable selon l'invention ainsi que les conditions de température adéquates en vue d'atteindre les caractéristiques de masses moléculaires de ce copolymère.

A titre préférentiel, la préparation du copolymère à blocs utilisable selon l'invention sera réalisée par polymérisation cationique vivante au moyen d'un amorceur monofonctionnel, difonctionnel ou polyfonctionnel et par ajout des monomères à polymériser pour la synthèse du bloc élastomère, puis par ajout séquencé pour le premier bloc ou par ajout consécutif pour le deuxième bloc des monomères à polymériser pour la synthèse du ou des blocs thermoplastiques.

La présente invention n'est pas restreinte à un procédé de polymérisation spécifique à partir d'un tel mélange de monomères. Ce type de procédé est connu de l'homme de l'art. Ainsi des synthèses décrites dans l'art antérieur, notamment dans les documents brevet EP 731 112, US 4 946 899, US 5 260 383, peuvent être mise en oeuvre par analogie pour préparer le copolymère à blocs utilisable selon l'invention.

Le copolymère à blocs peut constituer à lui seul la couche élastomère étanche aux gaz ou bien être associé, dans cette couche élastomère, à d'autres constituants pour former une composition élastomère.

En particulier, le copolymère à blocs utilisable selon l'invention peut être en mélange avec un autre copolymère à blocs utilisable selon l'invention d'un autre type.

Par exemple un premier copolymère à blocs selon l'invention peut être sous forme d'un tribloc linéaire avec un bloc isobutylène (bloc élastomère), un bloc constitué d'unités issues d'au moins un premier monomère polymérisable et un bloc constitué d'un copolymère statistique d'unités issues du β-pinène et d'unités issues d'au moins un second monomère polymérisable. Un deuxième copolymère à blocs selon l'invention peut être sous forme d'un polymère à cinq blocs avec un bloc isobutylène (bloc élastomère) central et, à chaque extrémité du bloc isobutylène, un bloc constitué d'unités issues d'au moins un premier monomère polymérisable et un bloc constitué d'un copolymère statistique d'unités issues du β-pinène et d'unités issues d'au moins un second monomère polymérisable. Ces deux copolymères à blocs utilisables selon l'invention en mélange peuvent alors former une couche élastomère étanche aux gaz utilisée selon l'invention.

Si d'éventuels autres élastomères sont utilisés dans cette composition, le ou les copolymères à blocs utilisables selon l'invention constituent le ou les élastomères majoritaires en poids ; ils représentent alors plus de 50 %, plus préférentiellement plus de 70 % en poids de l'ensemble des élastomères. De tels élastomères complémentaires minoritaires, pourraient être par exemple des élastomères diéniques tels que du caoutchouc naturel ou un polyisoprène synthétique, un caoutchouc butyle ou des élastomères thermoplastiques styréniques (TPS) autres que le ou les copolymères à blocs utilisables selon l'invention, dans la limite de la compatibilité de leurs microstructures.

A titre d'élastomère TPS autre que le ou les copolymères à blocs utilisables selon l'invention, peut être cité notamment un élastomère TPS choisi dans le groupe constitué par les copolymères blocs styrène/ butadiène/ styrène, les copolymères blocs styrène/ isoprène/ styrène, les copolymères blocs styrène/ isoprène/ butadiène/ styrène, les copolymères blocs styrène/ éthylène/ butylène/ styrène, les copolymères blocs styrène/ éthylène/ propylène/ styrène, les copolymères blocs styrène/ éthylène/ éthylène/ propylène/ styrène et les mélanges de ces copolymères. Plus préférentiellement, ledit élastomère TPS complémentaire éventuel est choisi dans le groupe constitué par les copolymères blocs styrène/ éthylène/ butylène/ styrène, les copolymères blocs styrène/ éthylène/ propylène/ styrène et les mélanges de ces copolymères.

Toutefois, selon un mode de réalisation préférentiel, le ou les copolymères à blocs utilisables selon l'invention sont les seuls élastomères présents dans la couche élastomère étanche aux gaz.

De manière particulièrement préférée, la couche élastomère étanche au gaz de gonflage ne comprend qu'un seul copolymère à blocs utilisable selon l'invention qui est le seul élastomère présent dans la couche élastomère étanche aux gaz.

Le copolymère à blocs précédemment décrit est suffisant à lui seul pour que soit remplie la fonction d'étanchéité aux gaz vis-à-vis des objets pneumatiques dans lesquels il est utilisé.

Toutefois, selon un mode de réalisation préférentiel de l'invention, ce dernier est utilisé dans une composition qui comporte également, à titre d'agent plastifiant, une huile d'extension (ou huile plastifiante) dont la fonction est de faciliter la mise en oeuvre, particulièrement l'intégration dans l'objet pneumatique par un abaissement du module et une augmentation du pouvoir tackifiant de la couche étanche aux gaz.

Ainsi dans ce mode de réalisation préférentiel de l'invention, la couche élastomère étanche aux gaz de gonflage comprend en outre une huile d'extension.

A titre d'huile d'extension, on peut utiliser toute huile d'extension, de préférence à caractère faiblement polaire, apte à étendre, plastifier des élastomères, notamment thermoplastiques. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

De préférence, l'huile d'extension est choisie dans le groupe constitué par les huiles polyoléfiniques (c'est-à-dire issues de la polymérisation d'oléfines, monooléfines ou dioléfines), les huiles paraffiniques, les huiles naphténiques (à basse ou haute viscosité), les huiles aromatiques, les huiles minérales, et les mélanges de ces huiles.

Plus préférentiellement, l'huile d'extension est choisie parmi les huiles oléfiniques, et de préférence est une huile polyisobutylène. (en abrégé « PIB »). En effet, cette huile a démontré le meilleur compromis de propriétés comparativement aux autres huiles testées, notamment à une huile conventionnelle du type paraffinique.

A titre d'exemples, des huiles polyisobutylène sont commercialisées notamment par la société UNIVAR sous la dénomination « Dynapak Poly » (par exemple « Dynapak Poly 190 »), par INEOS Oligomer sous la dénomination INDOPOL H1200, par BASF sous les dénominations « Glissopal » (par exemple « Glissopal 1000 ») ou « Oppanol » (par exemple « Oppanol B12 ») ; des huiles paraffiniques sont commercialisées par exemple par EXXON sous la dénomination « Telura 618 » ou par Repsol sous la dénomination « Extensol 51 ».

L'huile d'extension a de préférence une masse molaire moyenne en nombre allant de 350 à 4000 g/mol, plus préférentiellement allant de 400 à 3000 g/mol.

La masse moléculaire moyenne en nombre (Mn) de l'huile d'extension, quand elle est présente, peut être déterminée par chromatographie d'exclusion stérique (SEC) ; l'échantillon d'huile est préalablement solubilisé dans du tétrahydrofuranne à une concentration d'environ 1g/l ; puis la solution est filtrée sur filtre de porosité 0,45 µm avant injection. L'appareillage utilisé est une chaine chromatographique « WATERS alliance ». Le solvant d'élution est le tétrahydrofuranne, le débit de 1 ml/min, la température du système de 35°C et la durée d'analyse de 30 min. On utilise un jeu de deux colonnes WATERS de dénominations commerciales « STYRAGEL HT6E ». Le volume injecté de la solution de l'échantillon d'huile est de 100 µl. Le détecteur est un réfractomètre différentiel « WATERS 2410 » et son logiciel associé d'exploitation des données chromatographiques est le système « WATERS MILLENIUM ». Les masses molaires moyennes calculées sont relatives à une courbe d'étalonnage réalisée avec des étalons de polystyrène.

En effet, il a été montré que pour des masses moléculaires moyennes en nombre trop basses, il existe un risque de migration de l'huile à l'extérieur de la composition, tandis que des masses trop élevées peuvent entraîner une rigidification excessive de cette composition. Ce choix s'est avérée constituer un excellent compromis pour les applications visées, en particulier pour une utilisation dans un bandage pneumatique.

De manière préférée, l'huile d'extension est présente à une teneur supérieure à 5 pce, de préférence comprise entre 5 et 100 pce (parties en poids pour cent parties d'élastomère total, c'est-à-dire le copolymère à blocs utilisable selon l'invention ainsi que tout autre élastomère éventuel présent dans la composition ou couche élastomère).

En dessous du minimum indiqué, la composition élastomère risque de présenter une rigidité trop forte pour certaines applications tandis qu'au-delà du maximum préconisé, on s'expose à un risque de cohésion insuffisante de la composition et de perte d'étanchéité pouvant être néfaste selon l'application considérée.

Pour ces raisons, en particulier pour une utilisation de la composition étanche dans un bandage pneumatique, on préfère que le taux d'huile d'extension soit supérieur à 10 pce, notamment compris entre 10 et 90 pce, plus préférentiellement encore qu'il soit supérieur à 20 pce, notamment compris entre 20 et 80 pce.

La couche élastomère étanche aux gaz de gonflage décrite ci-dessus peut comporter par ailleurs les divers additifs usuellement présents dans les couches élastomères étanches aux gaz de gonflage connues de l'homme du métier.

On citera par exemple des charges renforçantes.

On peut utiliser tout type de charge renforçante connue pour ses capacités à renforcer une composition de caoutchouc utilisable pour la fabrication de pneumatiques, par exemple du noir de carbone, une charge inorganique renforçante telle que de la silice, ou encore un coupage de ces deux types de charge, notamment un coupage de noir de carbone et de silice.

Comme noirs de carbone conviennent tous les noirs de carbone, utilisés individuellement ou sous forme de mélanges, notamment les noirs du type HAF, ISAF, SAF conventionnellement utilisés dans les pneumatiques (noirs dits de grade pneumatique). On peut aussi utiliser, selon les applications visées, des noirs de séries plus élevées FF, FEF, GPF, SRF. Les noirs de carbone pourraient être par exemple déjà incorporés à l'élastomère diénique sous la forme d'un masterbatch, avant ou après greffage et de préférence après greffage (voir par exemple demandes WO 97/36724 ou WO 99/16600).

Comme charge inorganique renforçante autre que du noir de carbone, doit être entendu dans la présente demande, par définition, toute charge inorganique ou minérale par opposition au noir de carbone, capable de renforcer à elle seule, sans autre moyen qu'un agent de couplage intermédiaire, une composition de caoutchouc destinée à la fabrication de pneumatiques ; une telle charge se caractérise généralement, de manière connue, par la présence de groupes hydroxyle (-OH) à sa surface.

L'état physique sous lequel se présente la charge renforçante est indifférent, que ce soit sous forme de poudre, de microperles, de granulés, de billes ou toute autre forme densifiée appropriée. Bien entendu on entend également par charge renforçante des mélanges de différentes charges renforçantes, en particulier de charges siliceuses et/ou alumineuses hautement dispersibles telles que décrites ci-après.

Comme charges inorganiques renforçantes autre que du noir de carbone conviennent notamment des charges minérales du type siliceuse, en particulier de la silice (SiO₂), ou du type alumineuse, en particulier de l'alumine (Al₂O₃).

De préférence, le taux de charge renforçante dans la couche élastomère étanche varie de 10 à 200 pce, plus préférentiellement de 30 à 150 pce, en particulier de 50 à 120 pce, l'optimum étant, de manière connue en soi, différent selon les applications particulières visées.

Selon un mode de réalisation, la charge renforçante comprend majoritairement de la silice, de préférence le taux de noir de carbone présent dans la couche élastomère étanche étant inférieur à 20 pce plus préférentiellement inférieur à 10 pce (par exemple entre 0,5 et 20 pce, notamment de 1 à 10 pce).

De préférence, la charge renforçante comprend majoritairement du noir de carbone, voire est exclusivement constituée de noir de carbone.

Lorsque la charge renforçante comprend une charge nécessitant l'utilisation d'un agent de couplage pour établir la liaison entre la charge et l'élastomère, la couche élastomère étanche comprend en outre, de manière classique, un agent susceptible d'assurer efficacement cette liaison. Lorsque la silice est présente dans la couche élastomère étanche à titre de charge renforçante, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère thermoplastique, en particulier des organosilanes ou des polyorganosiloxanes bifonctionnels.

Dans la couche élastomère étanche utilisable selon l'invention, la teneur en agent de couplage varie préférentiellement de 0,5 à 12 pce, étant entendu qu'il est en général souhaitable d'en utiliser le moins possible. La présence de l'agent de couplage dépend de celle de la charge inorganique renforçante autre que du noir de carbone. Son taux est aisément ajusté par l'homme du métier selon le taux de cette charge; il est typiquement de l'ordre de 0,5 à 15 % en poids par rapport à la quantité de charge inorganique renforçante autre que du noir de carbone.

L'homme du métier comprendra qu'à titre de charge équivalente de la charge inorganique renforçante autre que noir de carbone, pourrait être utilisée une charge renforçante d'une autre nature, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère thermoplastique.

La couche élastomère étanche utilisable selon l'invention peut également contenir, des charges organiques renforçantes qui peuvent remplacer tout ou partie des noirs de carbone ou des autres charges inorganiques renforçantes décrites plus haut. Comme exemples de charges organiques renforçantes, on peut citer les charges organiques de polyvinyle fonctionnalisées telles que décrites dans les demandes WO-A-2006/069792, WO-A-2006/069793, WO-A-2008/003434 et WO-A-2008/003435.

A titre d'autres additifs usuellement présents dans les couches élastomères étanches aux gaz de gonflage connues de l'homme du métier, on citera par exemple des charges non renforçantes ou inertes, des agents colorants avantageusement utilisables pour la coloration de la composition, des charges lamellaires améliorant encore l'étanchéité (par exemple les phyllosilicates tels que kaolin, talc, mica, graphite, argiles ou argiles modifiées (« organo clays »), des plastifiants autres que les huiles d'extension précitées, des agents de protection tels que les antioxydants ou les antiozonants, anti-UV, divers agents de mise en oeuvre ou autres stabilisants, ou encore des promoteurs aptes à favoriser l'adhésion au reste de la structure de l'objet pneumatique.

La couche élastomère étanche aux gaz précédemment décrite est un composé solide (à 23°C) et élastique, qui se caractérise notamment, grâce à sa formulation spécifique, par une très haute souplesse et très haute déformabilité.

Selon un mode de réalisation préférentiel de l'invention, cette couche élastomère étanche aux gaz présente un module sécant en extension, à 10 % d'allongement (noté M10), qui est inférieur à 2 MPa, plus préférentiellement inférieur à 1,5 MPa (notamment inférieur à 1 MPa). Cette grandeur est mesurée en première élongation (c'est-à-dire sans cycle d'accommodation) à une température de 23°C, avec une vitesse de traction de 500 mm/min (norme ASTM D412), et rapportée à la section initiale de l'éprouvette.

La couche élastomère étanche aux gaz précédemment décrite est utilisable comme couche étanche aux gaz dans tout type d'objet pneumatique. A titre d'exemples de tels objets pneumatiques, on peut citer les bateaux pneumatiques, les ballons ou balles utilisées pour le jeu ou le sport.

Elle est particulièrement bien adaptée à une utilisation comme couche étanche à l'air (ou tout autre gaz de gonflage, par exemple azote) dans un objet pneumatique, produit fini ou semi-fini, en caoutchouc, tout particulièrement dans un bandage pneumatique pour véhicule automobile tel qu'un véhicule de type deux roues, tourisme ou industriel.

Une telle couche étanche à l'air est préférentiellement disposée sur la paroi interne de l'objet pneumatique, mais elle peut être également intégrée complètement à sa structure interne.

La couche étanche aux gaz a préférentiellement une épaisseur supérieure ou égale à 0,05 mm, de préférence allant de 0,1 à 10 mm, et plus préférentiellement allant de 0,1 à 2 mm.

On comprendra aisément que, selon les domaines d'application spécifiques, les dimensions et les pressions en jeu, le mode de mise en oeuvre de l'invention peut varier, la couche élastomère étanche aux gaz comportant alors plusieurs gammes d'épaisseur préférentielles.

Ainsi par exemple, pour des bandages pneumatiques de type tourisme, elle peut avoir une épaisseur d'au moins 0,4 mm, préférentiellement comprise entre 0,8 et 2 mm. Selon un autre exemple, pour des bandages pneumatiques de véhicules poids lourds ou agricole, l'épaisseur préférentielle peut se situer entre 1 et 3 mm. Selon un autre exemple, pour des bandages pneumatiques de véhicules dans le domaine du génie civil ou pour avions, l'épaisseur préférentielle peut se situer entre 2 et 10 mm.

L'objet pneumatique selon l'invention est de préférence un bandage pneumatique.

De manière générale, l'objet pneumatique selon l'invention est destiné à équiper des véhicules à moteur de type tourisme, SUV (« Sport Utility Vehicles »), deux roues (notamment motos), avions, ainsi que des véhicules industriels tels que des camionnettes, des poids-lourds et autres véhicules de transport ou de manutention.

A titre de poids lourds, on pourra notamment comprendre des métros, des bus et des engins de transport routier tels que camions, tracteurs, remorques et véhicules hors-la-route comme les engins agricoles ou de génie civil.

L'invention concerne également un procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz de gonflage telle que définie précédemment.

De manière préférée dans ce procédé d'étanchéification, la couche élastomère étanche aux gaz de gonflage est déposée sur la paroi interne de l'objet pneumatique.

Dans une variante particulière de ce procédé, l'objet pneumatique est un bandage pneumatique.

Dans cette variante particulière, au cours d'une première étape, la couche élastomère étanche aux gaz de gonflage est déposée à plat sur un tambour de confection, avant de recouvrir ladite couche élastomère étanche aux gaz de gonflage du reste de la structure du bandage pneumatique.

Enfin, l'invention concerne l'utilisation comme couche étanche aux gaz de gonflage, dans un objet pneumatique, d'une couche élastomère telle que définie précédemment.

L'invention ainsi que ses avantages seront compris de manière plus approfondie, à la lumière de la figure unique qui schématise, en coupe radiale, un bandage pneumatique conforme à l'invention, ainsi que des exemples de réalisation qui suivent.

La figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est représenté monté sur sa jante 9. L'armature de carcasse 7 est de manière connue en soi constituée d'au moins une nappe renforcée par des câbles dits « radiaux », par exemple textile ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du coté de la cavité interne 11 du bandage pneumatique 1.

Cette couche interne (ou « inner liner ») couvre toute la paroi interne du bandage pneumatique, se prolongeant d'un flanc à l'autre, au moins jusqu'au niveau du crochet de jante lorsque le bandage pneumatique est en position montée. Elle définit la face radialement interne dudit bandage destinée à protéger l'armature de carcasse de la diffusion d'air provenant de l'espace 11 intérieur au bandage. Elle permet le gonflement et le maintien sous pression du bandage pneumatique ; ses propriétés d'étanchéité doivent lui permettent de garantir un taux de perte de pression relativement faible et de maintenir le bandage gonflé, en état de fonctionnement normal, pendant une durée suffisante, normalement de plusieurs semaines ou plusieurs mois.

Contrairement à un bandage pneumatique conventionnel utilisant une composition à base de caoutchouc butyle, le bandage pneumatique conforme à l'invention utilise dans cet exemple, comme couche 10 étanche aux gaz de gonflage, un élastomère thermoplastique sous forme d'un copolymère à blocs tel que décrit plus haut.

Le pneumatique pourvu de sa couche étanche à l'air 10 tel que décrite ci-dessus peut être réalisé avant ou après vulcanisation (ou cuisson).

### Méthodes de mesures

### 1) Test d'étanchéité

Pour cette analyse, on a utilisé un perméamètre à parois rigides, placé dans une étuve (température de 60°C dans le cas présent), muni d'un capteur de pression relative (étalonné dans le domaine de 0 à 6 bars) et relié à un tube équipé d'une valve de gonflage. Le perméamètre peut recevoir des éprouvettes standards sous forme de disque (par exemple de diamètre 65 mm dans le cas présent) et d'épaisseur uniforme pouvant aller jusqu'à 1,5 mm (0,5 mm dans le cas présent). Le capteur de pression est connecté à une carte d'acquisition de données National Instruments (acquisition quatre voies analogiques 0-10 V) qui est reliée à un ordinateur réalisant une acquisition en continu avec une fréquence de 0,5 Hz (1 point toutes les deux secondes). Le coefficient de perméabilité (K) est mesuré à partir de la droite de régression linéaire donnant la pente α de la perte de pression à travers l'éprouvette testée en fonction du temps, après stabilisation du système c'est-à-dire obtention d'un régime stable au cours duquel la pression décroît linéairement en fonction du temps. Une valeur arbitraire de 100 est donnée pour l'étanchéité à l'air du témoin, un résultat supérieur à 100 indiquant une augmentation de l'étanchéité à l'air donc une diminution de la perméabilité.

### 2) Test d'adhésion (ou pelage) : couche élastomère étanche aux gaz de gonflage / couche à base d'un élastomère diénique

Des tests d'adhésion (tests de pelage) ont été conduits pour tester l'aptitude de la couche élastomère étanche aux gaz à adhérer après cuisson à une couche d'élastomère diénique, plus précisément à une composition de caoutchouc usuelle pour armature de carcasse de bandage pneumatique, à base de caoutchouc naturel (peptisé) et de noir de carbone N330 (65 parties en poids pour cent parties de caoutchouc naturel), comportant en outre les additifs usuels (soufre, accélérateur, ZnO, acide stéarique, antioxydant).

Les éprouvettes de pelage (du type pelage à 180°) ont été réalisées par empilage d'une couche mince de composition étanche aux gaz entre deux tissus calandrés le premier avec un élastomère SIBS (1,5 mm) et l'autre avec le mélange diénique considéré (1,2 mm). Une amorce de rupture est insérée entre les deux tissus calandrés en extrémité de la couche mince.

L'éprouvette après assemblage a été vulcanisée à 180°C sous pression pendant 10 minutes. Des bandes de 30 mm de largeur ont été découpées au massicot. Les deux côtés de l'amorce de rupture ont été ensuite placées dans les mors d'un machine de traction de marque Intron®. Les essais sont réalisés à température ambiante et à une vitesse de traction de 100 mm/min. On enregistre les efforts de traction et on norme ceux-ci par la largeur de l'éprouvette. On obtient une courbe de force par unité de largeur (en N/mm) en fonction du déplacement de traverse mobile de la machine de traction (entre 0 et 200 mm). La valeur d'adhésion retenue correspond à l'initiation de la rupture au sein de l'éprouvette et donc à la valeur maximale de cette courbe.

Une valeur arbitraire de 100 est donnée pour l'adhésion du témoin, un résultat supérieur à 100 indiquant une augmentation de l'adhésion.

### 3) Test de tenue thermique (ou test de détermination d'une température de ramollissement)

Pour caractériser la température de ramollissement d'une composition élastomérique, on utilise le test suivant :
- Appareillage : analyseur mécanique dynamique (DMA Q800) commercialisé par la société TA Instruments ;
- Echantillon : de forme cylindrique, il est réalisé au moyen d'un emporte pièce et mesure en moyenne 13 mm de diamètre pour une épaisseur de 2 mm ;
- Sollicitation : le porte échantillon se présente sous la forme d'un mors de compression ; cette pièce est constituée d'un plateau supérieur mobile (15 mm de diamètre) et d'un plateau inférieur fixe (15 mm de diamètre) ; l'échantillon est placé entre ces deux plateaux ; la pièce mobile permet d'appliquer une contrainte définie sur l'échantillon, de 1N ; l'ensemble est placé dans un four permettant de réaliser une rampe de température de l'ambiante à 180°C à 3°C/mn pendant laquelle on enregistre la déformation de l'échantillon ;
- Interprétation : les résultats se présentent sous forme de courbe de déformation de l'échantillon en fonction de la température ; on considère la température de ramollissement comme celle pour laquelle le matériau présente une diminution de son épaisseur de 10 %.

Une valeur arbitraire de 100 est donnée pour la tenue thermique du témoin, un résultat supérieur à 100 indiquant une augmentation de la tenue thermique.

### Exemple 1 : préparation d'un copolymère à blocs de référence (polymère 1) - copolymère à blocs styrène/isobutylène/styrène

Le copolymère à blocs (polymère 1) est synthétisé comme suit :
Un ballon séparable (récipient de polymérisation) de 500 ml est mis sous azote, puis du n-hexane (séché sur tamis moléculaire, 23,8 ml) et du chlorure de butyle (séché sur tamis moléculaire, 214,4 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (75 ml, 794 mmol), l'isobutylène est ajouté au récipient de polymérisation au moyen d'une pression d'azote. Ensuite, le chlorure de p-dicumyle (0,1248 g, 0,540 mmol) et l'a-picoline (0,1026 g, 1,10 mmol) sont additionnés. Puis, le tétrachlorure de titane (0,84 ml, 7,70 mmol) est additionné afin de démarrer la polymérisation. Après une agitation d'une heure à la même température (-70°C), un échantillon de la solution de polymérisation (environ 1 ml) est extrait de la solution totale de polymérisation.

Le styrène (9,79 g, 94,1 mmol), précédemment refroidi à -70°C, est ensuite ajouté dans le récipient de polymérisation. 45 mn après l'addition du styrène, la solution de polymérisation est versée dans de l'eau chaude (500 ml) afin de stopper la réaction et, ce mélange est alors agité pendant 30 mn. Ensuite, la solution de polymérisation est lavée avec de l'eau désionisée (3x 500 ml). Le solvant et les analogues sont évaporés à partir du brut de réaction lavé sous pression réduite à 80°C pendant 24 heures pour obtenir le copolymère à blocs. Les masses moléculaires moyennes en poids du bloc central (polyisobutylène) et du copolymère à blocs total sont mesurées par chromatographie sur gel perméable (GPC) telle que définie précédemment et la température de transition vitreuse est mesurée selon la méthode DMA telle que définie précédemment. Ces données sont rassemblées dans le tableau I, ci-après.

### Exemple 2 : préparation d'un copolymère à blocs comparatif (polymère 2) - copolymère à blocs β-pinène-co-styrène/isobutylène/β-pinène-co-styrène

Le copolymère à blocs (polymère 2) est synthétisé comme suit :
Un ballon séparable (récipient de polymérisation) de 2 litres est mis sous azote, puis du n-hexane (séché sur tamis moléculaire, 192 ml) et du chlorure de butyle (séché sur tamis moléculaire, 768 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (175 ml, 1852 mmol), l'isobutylène est ajouté au récipient de polymérisation au moyen d'une pression d'azote. Ensuite, le chlorure de p-dicumyle (0,1413 g, 0,611 mmol) et l'a-picoline (1,709 g, 18,3 mmol) sont additionnés. Puis, le tétrachlorure de titane (5,36 ml, 48,9 mmol) est additionné afin de démarrer la polymérisation. Après une agitation de 65 minutes à la même température (-70°C), un échantillon de la solution de polymérisation (environ 1 ml) est extrait de la solution totale de polymérisation.

Ensuite, le styrène est additionné (28,9 ml, 251 mmol). Une fois l'addition de styrène terminée, le β-pinène (3,64 ml, 23,2 mmol) est ajouté goutte à goutte pendant 40 mn. Une fois l'addition de β-pinène terminée, du tétrachlorure de titane (1,79 ml, 16,3 mmol) est encore une fois ajouté et le mélange est agité pendant 50 mn. Après, la solution de polymérisation est versée dans de l'eau chaude (2 litres) afin de stopper la réaction et, ce mélange est alors agité pendant 30 mn. Ensuite, la solution de polymérisation est lavée avec de l'eau désionisée (3x 2 litres). Le solvant et les analogues sont évaporés à partir du brut de réaction lavé sous pression réduite à 80°C pendant 24 heures pour obtenir le copolymère à blocs. Les masses moléculaires moyennes en poids du bloc central (polyisobutylène) et du copolymère à blocs total sont mesurées par chromatographie sur gel perméable (GPC) telle que définie précédemment et la température de transition vitreuse est mesurée selon la méthode DMA telle que définie précédemment. Ces données sont rassemblées dans le tableau I, ci-après.

### Exemple 3 : préparation d'un copolymère à blocs comparatif (polymère 3) - copolymère à blocs β-pinène/styrène/isobutylène/styrène/β-pinène

Le copolymère à blocs (polymère 3) est synthétisé comme suit :
Un ballon séparable (récipient de polymérisation) de 2 litres est mis sous azote, puis du n-hexane (séché sur tamis moléculaire, 192 ml) et du chlorure de butyle (séché sur tamis moléculaire, 768 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (175 ml, 1852 mmol), l'isobutylène est ajouté au récipient de polymérisation au moyen d'une pression d'azote. Ensuite, le chlorure de p-dicumyle (0,1413 g, 0,611 mmol) et l'α-picoline (1,7091 g, 18,3 mmol) sont additionnés. Puis, le tétrachlorure de titane (5,36 ml, 48,9 mmol) est additionné afin de démarrer la polymérisation. Après une agitation de 90 minutes à la même température (-70°C), un échantillon de la solution de polymérisation (environ 1 ml) est extrait de la solution totale de polymérisation.

Le styrène (28,9 ml, 251 mmol) est ensuite ajouté et le milieu est agité jusqu'à ce que le taux de conversion du styrène ait atteint 70 %. La conversion du styrène est suivie par chromatographie en phase gazeuse. Ensuite, le β-pinène (3,64 ml, 23,2 mmol), précédemment refroidi à -70°C, est ajouté dans le récipient de polymérisation.

Après 30 minutes, du tetrachlorure de titane (0,30 ml, 2,74 mmol) est encore ajouté et le milieu est agité pendant 20 minutes. La solution de polymérisation est alors versée dans de l'eau chaude (2 litres) afin de stopper la réaction et, ce mélange est alors agité pendant 30 mn. Ensuite, la solution de polymérisation est lavée avec de l'eau désionisée (3x 2 L). Le solvant et les analogues sont évaporés à partir du brut de réaction lavé sous pression réduite à 80°C pendant 24 heures pour obtenir le copolymère à blocs. Les masses moléculaires moyennes en poids du bloc central (polyisobutylène) et du copolymère à blocs total sont mesurées par chromatographie sur gel perméable (GPC) telle que définie précédemment et la température de transition vitreuse est mesurée selon la méthode DMA telle que définie précédemment. Ces données sont rassemblées dans le tableau I, ci-après.

### Exemple 4 : Préparation d'un copolymère à blocs utilisable dans l'objet pneumatique selon l'invention (polymère 4) - copolymère à blocs styrène/(β-pinène-co-styrène)/isobutylène/(β-pinène-co-styrène)/styrène

Le copolymère à blocs (polymère 4) est synthétisé comme suit :
Un ballon séparable (récipient de polymérisation) de 2 litres est mis sous azote, puis du n-hexane (séché sur tamis moléculaire, 176 ml) et du chlorure de butyle (séché sur tamis moléculaire, 706 ml) sont ajoutés au moyen d'une seringue. Le récipient de polymérisation est ensuite refroidi par immersion dans un bain sec glace/méthanol à -70°C. Un tube d'alimentation en Téflon est connecté à un flacon de collecte en verre résistant à la pression équipé avec un robinet à trois voies et contenant de l'isobutylène (175 ml, 1848 mmol), l'isobutylène est ajouté au récipient de polymérisation au moyen d'une pression d'azote. Ensuite, le chlorure de p-dicumyle (0,1447 g, 0,626 mmol) et l'a-picoline (1,750 g, 18,8 mmol) sont additionnés. Puis, le tétrachlorure de titane (5,49 ml, 50,1 mmol) est additionné afin de démarrer la polymérisation. Après une agitation de 75 minutes à la même température (-70°C), un échantillon de la solution de polymérisation (environ 1 ml) est extrait de la solution totale de polymérisation.

Le styrène (14,8 ml, 129 mmol) et le β-pinène (3,8 ml, 24,4 mmol) sont successivement ajoutés et le milieu est agité jusqu'à ce que le taux de conversion du styrène ait atteint 90 %. La conversion du styrène est suivie par chromatographie en phase gazeuse. Ensuite, le styrène (14,8 ml, 129 mmol), précédemment refroidi à -70°C, est ajouté dans le récipient de polymérisation. La conversion du styrène est suivie par chromatographie en phase gazeuse.

Lorsque le taux de conversion du styrène atteint 95 %, la solution de polymérisation est alors versée dans de l'eau chaude (2 litres) afin de stopper la réaction et, ce mélange est alors agité pendant 30 mn. Ensuite, la solution de polymérisation est lavée avec de l'eau désionisée (3x 2 L). Le solvant et les analogues sont évaporés à partir du brut de réaction lavé sous pression réduite à 80°C pendant 24 heures pour obtenir le copolymère à blocs. Les masses moléculaires moyennes en poids du bloc central (polyisobutylène) et du copolymère à blocs total sont mesurées par chromatographie sur gel perméable (GPC) telle que définie précédemment et la température de transition vitreuse est mesurée selon la méthode DMA telle que définie précédemment. Ces données sont rassemblées dans le tableau I, ci-après.

**Tableau I**

| Ce tableau rassemble les valeurs de masses molaires moyennes en poids (Mw), les taux des unités issues du β-pinène en moles par rapport au nombre de moles d'unités du copolymère à blocs (% β-pinène) et le pourcentage en poids du ou des blocs thermoplastiques par rapport au poids total du copolymère à blocs (% blocs TP). | | | | |
|---|---|---|---|---|
| | **Mw (en kg/mol)** | **% β- pinène** | **% blocs TP** | **Tg du bloc élastomère** |
| **Polymère 1** | 100 | 0 | 15 | -60°C |
| **Polymère 2** | 200 | 1,1 | 15 | -62°C |
| **Polymère 3** | 200 | 1,1 | 15 | -60°C |
| **Polymère 4** | 200 | 1,2 | 15 | -63°C |

Exemple 5 : préparation et évaluation de couche élastomère étanche aux gaz de gonflage utilisable dans l'objet pneumatique selon l'invention (matrice 100 % copolymère à blocs)

Les copolymères à blocs obtenus (polymères 1 à 4) ont été formulés dans des couches étanches aux gaz de gonflage constituées de 100 % de copolymère à blocs (respectivement couches 1 à 4).

Les couches en thermoplastique élastomères étanches de l'invention sont préparées de façon classique, par exemple, par incorporation du copolymère à blocs dans une extrudeuse bi-vis, de façon à réaliser la fusion de la matrice, puis utilisation d'une filière plate permettant de réaliser la couche thermoplastique. Plus généralement, la mise en forme du thermoplastique peut être faite par toute méthode connue de l'homme du métier : extrusion, calandrage, extrusion soufflage, injection, film coulé (« cast film » en anglais).

Les propriétés de ces couches étanches ont ensuite été évaluées.

Les données sont rassemblées dans le tableau II ci-dessous.

**Tableau II**

| Ce tableau rassemble les valeurs normalisées (par rapport à la couche 1) de l'étanchéité, de l'adhésion et de la tenue thermique des couches élastomères préparées au moyen des copolymères à blocs précédemment synthétisés ci-dessus. | | | |
|---|---|---|---|
| | **Etanchéité** | **Adhésion** | **Tenue thermique** |
| **Couche 1** | 100 | 100 | 100 |
| **Couche 2** | 100 | 320 | 113 |
| **Couche 3** | 92 | 520 | 118 |
| **Couche 4** | 116 | 490 | 114 |

La couche élastomère utilisable selon l'invention (couche 4) présente un effet synergique inattendu, notamment en étanchéité.

En particulier, avec le même taux de β-pinène et le même pourcentage en poids du ou des blocs thermoplastiques que les couches comparatives 2 et 3, la couche utilisable selon l'invention 4 présente une adhésion et une tenue thermique équivalentes mais une meilleure étanchéité et cela alors que les couches 2 et 3 présentent déjà de bons résultats. Cela traduit l'effet de l'architecture particulière du copolymère à bloc constitutif de la couche élastomère utilisable selon l'invention.

## Revendications

1. Objet pneumatique pourvu d'une couche élastomère étanche aux gaz de gonflage, ladite couche élastomère comportant à titre d'élastomère majoritaire un élastomère thermoplastique sous forme d'un copolymère à blocs qui comprend :
a) un bloc élastomère comportant au moins des unités issues de l'isobutylène, et présentant une température de transition vitreuse inférieure ou égale à -20°C,
b) un ou plusieurs blocs thermoplastiques, le ou les blocs thermoplastiques comprenant chacun au moins un premier bloc constitué d'unités issues d'au moins un premier monomère polymérisable et au moins un deuxième bloc, le ou lesdits deuxièmes blocs étant un copolymère statistique constitué d'unités issues d'au moins un second monomère polymérisable et d'unités issues du β-pinène.

2. Objet selon la revendication 1, **caractérisé en ce que** le copolymère à blocs présente une structure où le bloc élastomère est relié à une de ses extrémités à un bloc thermoplastique.

3. Objet selon la revendication 1, **caractérisé en ce que** le copolymère à blocs présente une structure linéaire où le bloc élastomère est relié à chacune de ses extrémités à un bloc thermoplastique.

4. Objet selon la revendication 1, **caractérisé en ce que** le copolymère à bloc présente une structure en étoile, le bloc élastomère étant central et étant relié de 3 à 12 branches, chaque branche étant constituée d'un bloc thermoplastique.

5. Objet selon l'une quelconque des revendications précédentes, **caractérisé en ce que** le ou les premiers monomères polymérisables sont choisis parmi les monomères styréniques, et de préférence le premier monomère polymérisable est le styrène.

6. Objet selon l'une quelconque des revendications précédentes, **caractérisé en ce que** le ou les seconds monomères polymérisables sont choisis parmi les monomères styréniques, et de préférence le second monomère polymérisable est le styrène.

7. Objet selon l'une quelconque des revendications précédentes, **caractérisé en ce que** le copolymère à blocs présente une masse moléculaire moyenne en poids allant de 30 à 300 kg/mol, de préférence de 120 à 250 kg/mol.

8. Objet selon l'une quelconque des revendications précédentes, **caractérisé en ce que** le taux d'unités issues du β-pinène varie de 0,5 à 25 % en moles, de préférence de 0,8 à 5 % en moles par rapport au nombre de moles d'unités du copolymère à blocs.

9. Objet selon l'une quelconque des revendications précédentes, **caractérisé en ce que** le bloc élastomère comprend de 0,5 à 6 % en poids d'unités issues d'un ou plusieurs diènes conjugués, de préférence de 1,5 à 5 % en poids par rapport au poids total du bloc élastomère.

10. Objet selon l'une quelconque des revendications précédentes, caractérisé en ce la couche élastomère étanche aux gaz de gonflage comprend en outre une huile d'extension dans une teneur supérieure à 5 pce, de préférence comprise entre 5 et 100 pce.

11. Objet selon l'une quelconque des revendications précédentes, **caractérisé en ce que** la couche élastomère étanche aux gaz de gonflage a une épaisseur supérieure ou égale à 0,05 mm, de préférence allant de 0,1 à 10 mm, et plus préférentiellement allant de 0,1 à 2 mm.

12. Objet selon l'une quelconque des revendications précédentes, **caractérisé en ce que** la couche élastomère étanche aux gaz de gonflage est disposée sur la paroi interne de l'objet pneumatique.

13. Procédé pour étanchéifier un objet pneumatique vis-à-vis des gaz de gonflage, dans lequel on incorpore audit objet pneumatique lors de sa fabrication, ou on ajoute audit objet pneumatique après sa fabrication, une couche élastomère étanche aux gaz de gonflage telle que définie dans l'une quelconque des revendications 1 à 11.

14. Procédé selon la revendication 13, **caractérisé en ce que** la couche élastomère étanche aux gaz de gonflage est déposée sur la paroi interne de l'objet pneumatique.

15. Utilisation comme couche étanche aux gaz de gonflage, dans un objet pneumatique, d'une couche élastomère telle que définie dans l'une quelconque des revendications 1 à 11.

## Patentansprüche

1. Pneumatisches Objekt, das mit einer aufpumpgasdichten Elastomerschicht versehen ist, wobei die Elastomerschicht als überwiegendes Elastomer ein thermoplastisches Elastomer in Form eines Blockcopolymers, das
a) einen Elastomerblock, der mindestens Einheiten, die sich von Isobutylen ableiten, umfasst und eine Glasübergangstemperatur kleiner oder gleich -20 °C aufweist,
b) einen oder mehrere thermoplastische Blöcke, wobei der thermoplastische Block bzw. die thermoplastischen Blöcke jeweils mindestens einen ersten Block aus Einheiten, die sich von mindestens einem ersten polymerisierbaren Monomer ableiten, und mindestens einen zweiten Block umfassen, wobei es sich bei dem zweiten Block bzw. den zweiten Blöcken um ein statistisches Copolymer aus Einheiten, die sich von mindestens einem zweiten polymerisierbaren Monomer ableiten, und Einheiten, die sich von β-Pinen ableiten, handelt, umfasst, umfasst.

2. Objekt nach Anspruch 1, **dadurch gekennzeichnet, dass** das Blockcopolymer eine Struktur aufweist, in der der Elastomerblock an einem seiner Enden mit einem thermoplastischen Block verbunden ist.

3. Objekt nach Anspruch 1, **dadurch gekennzeichnet, dass** das Blockcopolymer eine lineare Struktur aufweist, in der der Elastomerblock an jedem seiner Enden mit einem thermoplastischen Block verbunden ist.

4. Objekt nach Anspruch 1, **dadurch gekennzeichnet, dass** das Blockcopolymer eine sternverzweigte Struktur aufweist, wobei der Elastomerblock zentral ist und mit 3 bis 12 Verzweigungen verbunden ist, wobei jede Verzweigung aus einem thermoplastischen Block besteht.

5. Objekt nach einem der vorhergehenden Ansprüche, **dadurch gekennzeichnet, dass** das erste polymerisierbare Monomer bzw. die ersten polymerisierbaren Monomere aus Styrolmonomeren ausgewählt ist bzw. sind und es sich bei dem ersten polymerisierbaren Monomer vorzugsweise um Styrol handelt.

6. Objekt nach einem der vorhergehenden Ansprüche, **dadurch gekennzeichnet, dass** das zweite polymerisierbare Monomer bzw. die zweiten polymerisierbaren Monomere aus Styrolmonomeren ausgewählt ist bzw. sind und es sich bei dem zweiten polymerisierbaren Monomer vorzugsweise um Styrol handelt.

7. Objekt nach einem der vorhergehenden Ansprüche, **dadurch gekennzeichnet, dass** das Blockcopolymer ein gewichtsmittleres Molekulargewicht im Bereich von 30 bis 300 kg/mol, vorzugsweise von 120 bis 250 kg/mol, aufweist.

8. Objekt nach einem der vorhergehenden Ansprüche, **dadurch gekennzeichnet, dass** der Gehalt an Einheiten, die sich von β-Pinen ableiten, im Bereich von 0,5 bis 25 Mol-%, vorzugsweise von 0,8 bis 5 Mol-%, bezogen auf die Zahl der Mole der Einheiten des Blockcopolymers, variiert.

9. Objekt nach einem der vorhergehenden Ansprüche, **dadurch gekennzeichnet, dass** der Elastomerblock 0,5 bis 6 Gew.-% Einheiten, die sich von einem oder mehreren konjugierten Dienen ableiten, vorzugsweise 1,5 bis 5 Gew.-%, bezogen auf das Gesamtgewicht des Elastomerblocks, umfasst.

10. Objekt nach einem der vorhergehenden Ansprüche, **dadurch gekennzeichnet, dass** die aufpumpgasdichte Elastomerschicht außerdem ein Strecköl in einem Gehalt von mehr als 5 phe, vorzugsweise zwischen 5 und 100 phe, umfasst.

11. Objekt nach einem der vorhergehenden Ansprüche, **dadurch gekennzeichnet, dass** die aufpumpgasdichte Elastomerschicht eine Dicke größer oder gleich 0,05 mm, vorzugsweise im Bereich von 0,1 bis 10 mm und weiter bevorzugt im Bereich von 0,1 bis 2 mm aufweist.

12. Objekt nach einem der vorhergehenden Ansprüche, **dadurch gekennzeichnet, dass** die aufpumpgasdichte Elastomerschicht auf der Innenwand des pneumatischen Objekts angeordnet ist.

13. Verfahren zum Abdichten eines pneumatischen Objekts gegenüber Aufpumpgasen, bei dem man eine aufpumpgasdichte Elastomerschicht gemäß einem der Ansprüche 1 bis 11 in das pneumatische Objekt bei dessen Herstellung einarbeitet oder zu dem pneumatischen Objekt nach dessen Herstellung hinzufügt.

14. Verfahren nach Anspruch 13, **dadurch gekennzeichnet, dass** man die aufpumpgasdichte Elastomerschicht auf der Innenwand des pneumatischen Objekts anordnet.

15. Verwendung einer Elastomerschicht gemäß einem der Ansprüche 1 bis 11 als aufpumpgasdichte Schicht in einem pneumatischen Objekt.

## Claims

1. Pneumatic object provided with an elastomer layer which is gastight to inflation gases, said elastomer layer comprising, as predominant elastomer, a thermoplastic elastomer in the form of a block copolymer which comprises:
a) an elastomeric block comprising at least units derived from isobutylene, and having a glass transition temperature of less than or equal to -20°C,
b) one or more thermoplastic blocks, the thermoplastic block(s) each comprising at least one first block consisting of units derived from at least one first polymerizable monomer and at least one second block, said second block(s) being a random copolymer consisting of units derived from at least one second polymerizable monomer and of units derived from β-pinene.

2. Object according to Claim 1, **characterized in that** the block copolymer has a structure in which the elastomeric block is connected at one of its ends to a thermoplastic block.

3. Object according to Claim 1, **characterized in that** the block copolymer has a linear structure in which the elastomeric block is connected at each of its ends to a thermoplastic block.

4. Object according to Claim 1, **characterized in that** the block copolymer has a star-branched structure, the elastomeric block being central and being connected to 3 to 12 branches, each branch consisting of a thermoplastic block.

5. Object according to any one of the preceding claims, **characterized in that** the first polymerizable monomer(s) are selected from styrene monomers, and preferably the first polymerizable monomer is styrene.

6. Object according to any one of the preceding claims, **characterized in that** the second polymerizable monomer(s) are selected from styrene monomers, and preferably the second polymerizable monomer is styrene.

7. Object according to any one of the preceding claims, **characterized in that** the block copolymer has a weight-average molecular weight ranging from 30 to 300 kg/mol, preferably from 120 to 250 kg/mol.

8. Object according to any one of the preceding claims, **characterized in that** the content of units derived from β-pinene ranges from 0.5 to 25 mol%, preferably from 0.8 to 5 mol% relative to the number of moles of units of the block copolymer.

9. Object according to any one of the preceding claims, **characterized in that** the elastomeric block comprises from 0.5 to 6% by weight of units derived from one or more conjugated dienes, preferably from 1.5 to 5% by weight relative to the total weight of the elastomeric block.

10. Object according to any one of the preceding claims, **characterized in that** the elastomer layer which is gastight to inflation gases also comprises an extending oil, in a content of greater than 5 phr, preferably between 5 and 100 phr.

11. Object according to any one of the preceding claims, **characterized in that** the elastomer layer which is gastight to inflation gases has a thickness of greater than or equal to 0.05 mm, preferably ranging from 0.1 to 10 mm, and more preferentially ranging from 0.1 to 2 mm.

12. Object according to any one of the preceding claims, **characterized in that** the elastomer layer which is gastight to inflation gases is arranged on the inner wall of the pneumatic object.

13. Process for rendering a pneumatic object gastight to inflation gases, in which an elastomer layer which is gastight to inflation gases, as defined in any one of Claims 1 to 11, is incorporated into said pneumatic object during the manufacture thereof, or added to said pneumatic object after the manufacture thereof.

14. Process according to Claim 13, **characterized in that** the elastomer layer which is gastight to inflation gases is arranged on the inner wall of the pneumatic object.

15. Use, as layer which is gastight to inflation gases, in a first pneumatic object, of an elastomer layer as defined in any one of Claims 1 to 11.
